# EUROPÄISCHE PATENTSCHRIFT

(11) **EP 2 368 704 B1**
(45) Veröffentlichungstag und Bekanntmachung des Hinweises auf die Patenterteilung: **20.07.2016**
(21) Anmeldenummer: 11002246.4
(22) Anmeldetag: 18.03.2011
(51) Int. Cl.: B30B 11/00, B30B 11/08, B30B 15/32, B65G 47/71

(54) **Tablettenablauf**
Tablet outlet
Dispositif de déchargement de comprimés

(30) Priorität: 23.03.2010 DE 102010012327
(43) Veröffentlichungstag der Anmeldung: 28.09.2011
(73) Patentinhaber: Fette Compacting GmbH, 21493 Schwarzenbek (DE)
(72) Erfinder: Kolbe, Sven, 21514 Büchen (DE); Casemir-Malner Bernd, 21483 Lütau (DE); Rau, Matthias, 21521 Dassendorf (DE); Naeve, Jan, 23899 Gudow (OT Kehrsen) (DE); Heinrich, Thomas, 21435 Stelle (DE)
(74) Vertreter: Hauck Patentanwaltspartnerschaft mbB

(56) Entgegenhaltungen:
- EP-A1- 1 989 945
- EP-A2- 1 974 895
- WO-A1-95/18053
- FR-A1- 2 252 271
- FR-A1- 2 310 945
- GB-A- 576 898
- US-A- 2 235 286
- US-A- 2 570 923
- US-A- 3 326 349
- US-A- 4 147 248
- US-A- 4 174 920

## Beschreibung

Die Erfindung betrifft einen Tablettenablauf zum Abführen von in einer Tablettenpresse verpressten Tabletten, mit einem Hauptablaufkanal, der mindestens eine Verzweigung in mindestens einen ersten Ablaufkanal und mindestens einen von dem ersten Ablaufkanal durch mindestens eine Trennwand getrennten zweiten Ablaufkanal aufweist, wobei an der Verzweigung eine Weiche vorgesehen ist, die derart betätigbar ist, dass Tabletten aus dem Hauptablaufkanal wahlweise in den ersten Ablaufkanal oder in den zweiten Ablaufkanal geführt werden.

Derartige Tablettenabläufe werden für den Abtransport von in einer Tablettenpresse verpressten Tabletten eingesetzt und bilden damit die Schnittstelle der Presse zur Peripherie. Um eine produktionsgerechte Sortierung des von der Presse kommenden Tablettenstroms zu gewährleisten, sind derartige Tablettenabläufe oftmals mit mindestens einer Verzweigung und einer im Bereich der Verzweigung angeordneten Weiche versehen. Die Weichen können durch einen Drehmechanismus so gesteuert werden, dass von der Presse kommende und in dem Hauptablauf geführte Tabletten wahlweise in den ersten oder zweiten Ablaufkanal geleitet werden. Ein solcher Tablettenablauf ist beispielsweise bekannt aus EP 1 974 895 A2.

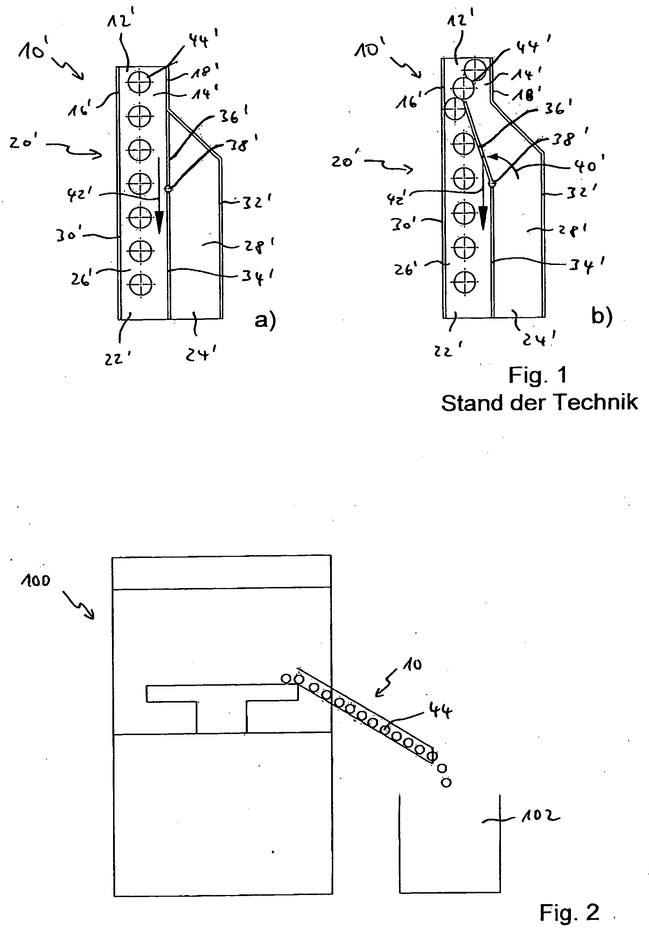

Anhand von Figur 1 sollen der Aufbau und die Funktion eines solchen Tablettenablaufs nach dem Stand der Technik erläutert werden. Der Tablettenablauf 10' ist in den Figuren 1a) und 1b) in zwei verschiedenen Betriebspositionen gezeigt. Der Tablettenablauf 10' besitzt einen Hauptablaufkanal 12' mit einem Kanalboden 14' und zwei seitlichen Wänden 16', 18'. Der Tablettenablauf 10' besitzt außerdem eine Verzweigung 20', an der der Hauptablaufkanal 12' sich in einen ersten Ablaufkanal 22' und einen zweiten Ablaufkanal 24' verzweigt. Der erste und zweite Ablaufkanal 22', 24' besitzen ebenfalls jeweils einen Kanalboden 26', 28' sowie seitliche Führungswände 30', 32'. Der erste und zweite Ablaufkanal 22', 24' sind durch eine Trennwand 34' voneinander getrennt, die jeweils auch eine seitliche Führungswand des ersten und zweiten Ablaufkanals 22', 24' bildet. Im Bereich der Verzeigung 20' ist eine Weiche 36' angeordnet. Die Weiche 36' besteht aus einem Wandelement, welches an dem dem Hauptablaufkanal 12' zugewandten Ende der Trennwand 34' um eine Drehachse 38' drehbar angeordnet ist. Mittels eines nicht gezeigten Stellantriebs kann die Weiche 36' um die Drehachse 38' aus der in Figur 1a) gezeigten Position gegen den Uhrzeigersinn gedreht werden, wie dies in Figur 1b) durch den Pfeil 40' veranschaulicht ist. Wie in Figur 1 durch den Pfeil 42' veranschaulicht ist, werden von der Presse verpresste Tabletten 44' durch den Hauptablaufkanal 12' geleitet. In der in Figur 1a) gezeigten Drehstellung der Weiche 36' werden die Tabletten 44' aus dem Hauptablaufkanal 12' in den ersten Ablaufkanal 22' geführt. Sollen Tabletten 44' in den zweiten Ablaufkanal 24' geleitet werden, wird die Weiche 36' mittels des Stellantriebs um die Drehachse 38' in Figur 1 entgegen dem Uhrzeigersinn gedreht, wie dies in Figur 1b) gezeigt ist. Dabei kann es dabei jedoch zu einem Einklemmen von Tabletten 44' im Bereich der Weiche 36' kommen. Dies wiederum führt zu einem Rückstau, der zu einer Notabschaltung und damit zu einem Produktionsausfall der Presse führen kann.

Aus FR 2 252 271 A1 ist eine Weiche zur Verteilung von entlang einer Linie geförderten Gegenständen wie Flaschen, Tuben, Konserven oder dergleichen aus Füll- oder Verpackungsmaschinen auf zwei Förderbahnen bekannt, bei der seitliche, einen Durchgang für die zu verteilenden Gegenstände begrenzende Führungen um eine vertikale Achse schwenkbar sind. Insofern beschreibt dieses Dokument einen Tablettenablauf gemäß dem Oberbegriff der Ansprüche 1 und 2. Aus US 4 174 920 A ist ein Festbrennstoffverteilsystem bekannt zum gleichmäßigen Verteilen des Brennstoffes in einem Ofen. Das System besitzt hierzu zwei gegenläufig schwenkende Rinnen. Aus US 3 326 349 A ist ein System zum Aufteilen von Verpackungsartikeln in mehrere Ausgabepfade bekannt. Aus FR 2 310 945 A ist eine Weiche zur Verteilung von entlang einer Linie geförderten Gegenständen auf zwei Förderbahnen bekannt, wiederum insbesondere Flaschen, Tuben, Konserven oder dergleichen. Schließlich ist aus WO 95/18053 A1 eine Vorrichtung zum Verteilen von entlang einer Spur kommenden Gegenständen in mehrere Spuren bekannt, insbesondere Gläser oder dergleichen.

Ausgehend von dem erläuterten Stand der Technik liegt der Erfindung daher die Aufgabe zugrunde, einen Tablettenablauf der eingangs genannten Art bereitzustellen, mit dem ein Einklemmen von Tabletten und damit ein Rückstau und Produktionsausfall sicher vermieden werden.

Diese Aufgabe wird gemäß der Erfindung durch die Gegenstände der Ansprüche 1 und 2 gelöst. Vorteilhafte Ausgestaltungen finden sich in den abhängigen Ansprüchen, der Beschreibung und den Figuren.

Bei der Tablettenpresse kann es sich beispielsweise um eine an sich bekannte Rundläufertablettenpresse handeln. In der Presse verpresste und aus entsprechenden Matrizen bzw. Matrizenbohrungen ausgeworfene Tabletten werden dem mit der Presse in Verbindung stehenden Hauptablaufkanal zugeführt. Von diesem werden sie bis zu der Verzweigung geführt, wo sie je nach Stellung der Weiche beispielsweise einem ersten oder zweiten Ablaufkanal zugeführt werden. Einer der Ablaufkanäle kann dabei ein sogenannter Schlechtkanal sein, in den Tabletten geleitet werden, die eine sensorische oder anderweitige Qualitätskontrolle nicht bestanden haben. Der Schlechtkanal kann in einen Sammelbehälter für aus der Produktion auszusortierende Tabletten münden. Ein anderer Ablaufkanal kann z.B. in einen Sammelbehälter für gut befundene und damit weiter zu verwendende Tabletten münden. In an sich bekannter Weise können der Hauptablaufkanal, der erste Ablaufkanal und/oder der zweite Ablaufkanal jeweils einen Kanalboden zur Aufnahme und Förderung der Tabletten und/oder zumindest zwei seitliche Kanalwände aufweisen, die sich ausgehend von dem Boden erstrecken.

Erfindungsgemäß ist an der Abzweigung eine Weiche mit einem Führungskanal vorgesehen, der die von dem Hauptablaufkanal kommenden Tabletten aufnimmt und durch die Verzweigung führt. Ein Führungsgetriebe weist einen Stellantrieb auf, der den Führungskanal über das Führungsgetriebe zwischen einer ersten und zweiten Stellung bewegt, so dass die Tabletten durch den Führungskanal wahlweise in den ersten oder zweiten Ablaufkanal geführt werden. Dabei befinden sich die Tabletten während der Bewegung des Führungskanals zwischen der ersten und zweiten Stellung bereits in dem Führungskanal und werden gemeinsam mit dem Führungskanal bewegt. Auf diese Weise werden die Tabletten auch während des Stellvorgangs der Weiche sicher geführt, so dass ein Einklemmen von Tabletten vermieden wird. Dadurch wiederum wird ein Rückstau von Tabletten verhindert und Produktionsausfallzeiten werden minimiert.

Für eine besonders sichere Führung der Tabletten in dem Führungskanal kann der Führungskanal einen Führungsboden zur Aufnahme der Tabletten und mindestens zwei sich von dem Führungsboden erstreckende seitliche Wände aufweisen. Dabei kann der Führungskanal beispielsweise einen U-förmigen Querschnitt besitzen. Der Führungskanal kann natürlich auch vollständig geschlossen sein. Ebenfalls ist es denkbar, dass der Führungskanal nur einen Führungsboden ohne seitliche Wände besitzt oder, dass der Führungskanal nur seitliche Wände ohne einen Führungsboden besitzt. Zur weiteren Verbesserung der Tablettenführung in dem Führungskanal und damit im Bereich der Verzweigung kann der Führungskanal mit seinem dem Hauptablaufkanal abgewandten Ende in der ersten Stellung in oder an dem ersten Ablaufkanal angeordnet sein und in der zweiten Stellung in oder an dem zweiten Ablaufkanal angeordnet sein. Der Führungskanal mündet also in der ersten bzw. zweiten Stellung in den ersten bzw. zweiten Ablaufkanal jeweils ohne einen Spalt oder einen Abstand zu dem dem Hauptablaufkanal zugewandten Ende des ersten bzw. zweiten' Ablaufkanals, insbesondere eines Bodens und/oder seitlicher Wände des ersten bzw. zweiten Ablaufkanals, zu bilden.

Der Führungskanal nimmt bei einer Bewegung zwischen der ersten Stellung und der zweiten Stellung mit seinem dem Hauptablaufkanal abgewandten Ende zumindest zeitweise einen Abstand zu der Trennwand ein.

Ein solcher Abstand zwischen dem Führungskanal und dem dem Hauptablaufkanal zugewandten Ende der Trennwand zwischen den Ablaufkanälen stellt sicher, dass zwischen dem Ende des Führungskanals und der Trennwand beim Umschalten zwischen dem ersten und zweiten Ablaufkanal keine Tabletten eingeklemmt werden können. Zur Realisierung eines solchen Abstands sind unterschiedliche Ausgestaltungen möglich. So kann beispielsweise vorgesehen sein, dass der Führungskanal mit seinem dem Hauptablaüfkanal abgewandten Ende um eine erste Drehachse drehbar an einem ersten Ende einer Koppelstange gelagert ist, wobei das zweite Ende der Koppelstange um eine zweite Drehachse drehbar an der Trennwand gelagert ist, und wobei ein Stellantrieb vorgesehen ist, der die Koppelstange zur Bewegung des Führungskanals zwischen der ersten und der zweiten Stellung um die zweite Drehachse dreht. Auch ist es möglich, dass der Führungskanal mit seinem dem Hauptablaufkanal abgewandten Ende um eine erste Drehachse drehbar an einem Exzenter gelagert ist, wobei der Exzenter um eine zweite Drehachse drehbar an der Trennwand gelagert ist, und wobei ein Stellantrieb vorgesehen ist, der den Exzenter zur Bewegung des Führungskanals zwischen der ersten und der zweiten Stellung um die zweite Drehachse dreht. Das Führungsgetriebe kann also ein Koppel- öder Exzentergetriebe sein. Der zum Betätigen des Getriebes vorgesehene Stellantrieb kann beispielsweise ein (elektrischer) Stellmotor sein. Die Drehbewegung des Stellantriebs wird über die Koppelstange oder den Exzenter in eine kombinierte Dreh- und Linearbewegung der Weiche bzw. des Führungskanals übertragen. Bei dem Exzenter handelt es sich insbesondere um eine Exzenterscheibe, deren erste Drehachse exzentrisch zu der zweiten Drehachse angeordnet sein kann, um die die Scheibe gedreht wird.

Im Gegensatz zum Stand der Technik wird die Weiche also nicht mehr zentrisch auf einer Welle gelagert, sondern in einem Langloch geführt, wobei das Betätigen der Weiche bzw. des Führungskanals zwischen der ersten und zweiten Stellung über eine Kreisbahn erfolgt. Der kreisförmige Verlauf ist dabei so gestaltet, dass das der Trennwand zugewandte Ende des Führungskanals während der Bewegung zwischen der ersten und zweiten Stellung einen Spalt bzw. Abstand zu der Trennwand zwischen dem ersten und zweiten Ablaufkanal bildet. Dieser Spalt schließt sich erst wieder, wenn die Betätigung des Führungskanals abgeschlossen ist. Zu dieser Zeit ist der in dem Führungskanal geführte Tablettenstrom jedoch bereits vollständig umgelenkt, so dass ein Einklemmen von Tabletten sicher verhindert wird.

Es ist beispielsweise möglich, dass der erste Ablaufkanal und der zweite Ablaufkanal nebeneinander angeordnet sind. Es ist aber auch denkbar, dass der erste Ablaufkanal und der zweite Ablaufkanal übereinander angeordnet sind.

Die Erfindung betrifft außerdem eine Tablettenpresse, umfassend mindestens einen erfindungsgemäßen Tablettenablauf.

Ein Ausführungsbeispiel der Erfindung wird nachfolgend anhand von Figuren näher erläutert. Es zeigen schematisch:
- Fig. 1: einen Tablettenablauf nach dem Stand der Technik in zwei Betriebsstellungen in einer Draufsicht,
- Fig. 2: eine erfindungsgemäße Tablettenpresse in einer vertikalen Schnittansicht,
- Fig. 3: einen erfindungsgemäßen Tablettenablauf in einer ersten Betriebsstellung in einer Draufsicht,
- Fig. 4: den Tablettenablauf aus Fig. 3 in einer zweiten Betriebsstellung, und
- Fig. 5: den Tablettenablauf aus Fig. 3 in einer dritten Betriebsstellung.

Soweit nichts anderes angegeben ist, bezeichnen in den Figuren gleiche Bezugszeichen gleiche Gegenstände. In Figur 2 ist eine Tablettenpresse 100 äußerst schematisch gezeigt. Bei der Tablettenpresse 100 handelt es sich in dem dargestellten Beispiel um eine Rundläuferpresse der an sich bekannten Art. Diese soll daher nicht weiter erläutert werden. Die Tablettenpresse 100 besitzt einen in Figur 2 bei dem Bezugszeichen 10 zu erkennenden Tablettenablauf, über den in der Tablettenpresse 100 verpresste Tabletten 44 mindestens einem Sammelbehälter 102 zugeführt werden können.

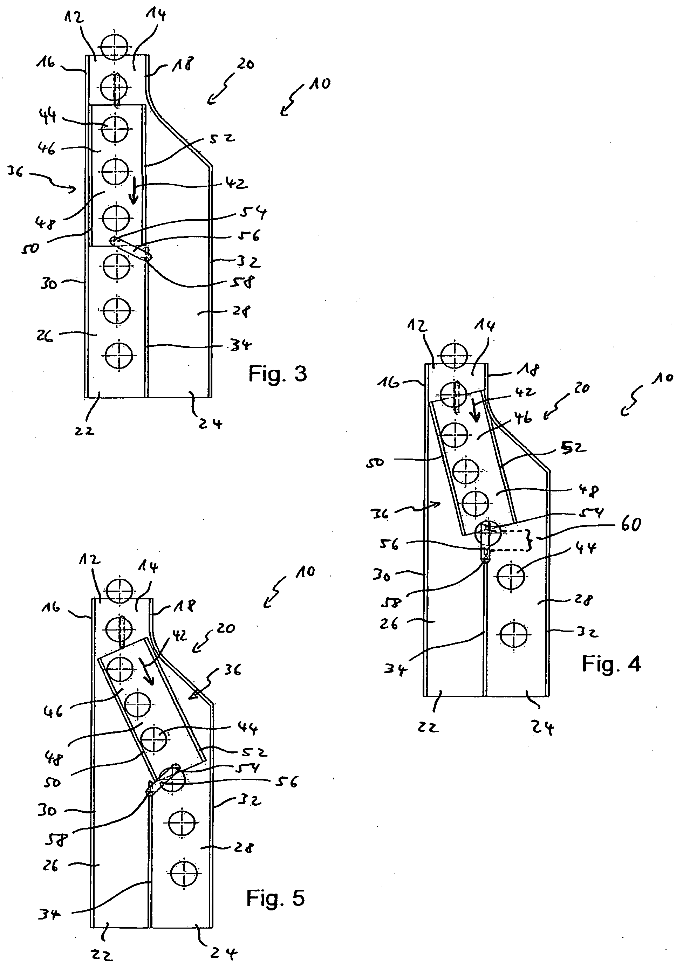

Der in Figur 2 gezeigte Tablettenablauf 10 soll anhand der Figuren 3, 4 und 5 näher erläutert werden. Der Tablettenablauf 10 besitzt einen mit der Tablettenpresse in Verbindung stehenden Hauptablaufkanal 12. Der Hauptablaufkanal 12 besitzt einen Kanalboden 14 zur Aufnahme der in der Presse verpressten Tabletten 44 sowie zwei seitliche Kanalwände 16, 18. Er besitzt einen U-förmigen Querschnitt. Der Tablettenablauf 10 weist außerdem eine bei dem Bezugszeichen 20 gezeigte Verzweigung auf, an der der Hauptablaufkanal 12 in einen ersten Ablaufkanal 22 und einen zweiten Ablaufkanal 24 verzweigt. Der erste und zweite Ablaufkanal besitzen ebenfalls jeweils einen Kanalboden 26, 28 zur Aufnahme der Tabletten sowie jeweils eine seitliche Kanalwand 30, 32. Sie besitzen ebenfalls jeweils einen U-förmigen Querschnitt. Der erste und zweite Ablaufkanal 22, 24 sind durch eine Trennwand 34 voneinander getrennt, die jeweils auch eine seitliche Begrenzungswand des ersten und zweiten Ablaufkanals 22, 24 bildet.

Im Bereich der Verzweigung 20 ist außerdem eine Weiche 36 vorgesehen. Die Weiche 36 umfasst einen Führungskanal 46, der einen Führungsboden 48 und in dem gezeigten Beispiel zwei seitliche Führungswände 50, 52 aufweist. Auch der Führungskanal besitzt einen U-förmigen Querschnitt. Mit seinem dem Hauptablaufkanal 12 abgewandten Ende ist der Führungskanal 46 um eine erste Drehachse 54 drehbar an einem ersten Ende einer Koppelstange 56 gelagert. Das zweite Ende der Koppelstange 56 ist um eine zweite Drehachse 58 drehbar an dem dem Hauptablaufkanal 12 zugewandten Ende der Trennwand 34 zwischen dem ersten und zweiten Ablaufkanal 22, 24 gelagert. Mittels eines nicht gezeigten Stellantriebs, beispielsweise eines elektrischen Stellmotors, kann die Koppelstange 56 zur Bewegung des Führungskanals 46 um die zweite Drehachse 58 gedreht werden.

Die Funktion des erfindungsgemäßen Tablettenablaufs 10 soll nun näher erläutert werden. In der Tablettenpresse 100 verpresste Tabletten 44 werden in den Hauptablaufkanal 12 und von diesem zu der Verzweigung 20 geleitet. Die Förderrichtung der Tabletten ist in den Figuren 3 bis 5 schematisch durch den Pfeil 42 angedeutet. In der in Figur 3 gezeigten ersten Stellung des Führungskanals 46 werden die Tabletten 44 aus dem Hauptablaufkanal 12 in den mit diesem verbundenen ersten Ablaufkanal 22 geführt. Zu erkennen ist, dass der Führungskanal 46 in dieser ersten Stellung mit seinem dem Hauptablaufkanal 12 abgewandten Ende an dem durch das dem Hauptablaufkanal 12 zugewandten Ende der Trennwand 34 gebildeten Beginn des ersten Ablaufkanals 22 anliegt. Weiterhin ist zu erkennen, dass der Ablaufkanal 46 in dieser ersten Stellung mit seiner ersten seitlichen Wand 50 direkt an der dieser zugeordneten seitlichen Wand 16 des Hauptablaufkanals 12 anliegt und mit seiner zweiten seitlichen Wand 52 den Zugang zu dem zweiten Ablaufkanal 24 verschließt.

Um nun Tabletten 44 aus dem Hauptablaufkanal 12 in den zweiten Ablaufkanal 24 zu leiten, wird die Koppelstange 56 mittels des Stellantriebs um die zweite Drehachse 58 gedreht, in den Figuren 3 bis 5 im Uhrzeigersinn. In Figur 4 ist eine Zwischenstellung des Führungskanals 46 zwischen seiner ersten Stellung und seiner den Hauptablaufkanal 12 mit dem zweiten Ablaufkanal 24 verbindenden zweiten Stellung dargestellt. Zu erkennen ist, dass die Drehbewegung des Stellantriebs um die zweite Drehachse 58 über die Koppelstange 56 in eine kombinierte Dreh- und Linearbewegung des Führungskanals 56 übertragen wird. Insbesondere wird der Führungskanal 56 etwa um die Länge der Koppelstange 56 in den Hauptablaufkanal 12 hineinbewegt, so dass in der in Figur 4 gezeigten Zwischenstellung zwischen dem dem Hauptablaufkanal 12 abgewandten Ende des Führungskanals 46 und dem dem Hauptablaufkanal 12 zugewandten Ende der Trennwand 34 ein Abstand besteht, der in Figur 4 bei dem Bezugszeichen 60 gezeigt ist. In Figur 4 ist ebenfalls zu erkennen, dass die von dem Hauptablaufkanal 12 kommenden Tabletten 44 durch den Führungskanal 46, insbesondere seine Seitenwand 50, in Richtung zu dem zweiten Ablaufkanal 24 geführt werden, wobei auch die sich zum Beginn des Stellvorgangs der Weiche 36 bereits in der Verzweigung 20 befindlichen Tabletten 44 abgelenkt werden. Außerdem ist zu erkennen, dass aufgrund des Abstandes 60 ein Verklemmen von Tabletten 44 zwischen dem in Figur 4 unteren Ende des Führungskanals 46 und dem in Figur 4 oberen Ende der Trennwand 34 sicher vermieden wird.

In Figur 5 ist der vollständig in die zweite Stellung bewegte Zustand des Führungskanals 46 gezeigt. Zu erkennen ist, dass durch das mit der Koppelstange 56 gebildete Koppelgetriebe der Abstand 60 wieder geschlossen wird. So ist der Führungskanal 46 mit seinem dem Hauptablaufkanal 12 abgewandten Ende in der in Figur 5 gezeigten zweiten Stellung wiederum an dem Beginn des zweiten Ablaufkanals 24 angeordnet, der durch das dem Hauptablaufkanal 12 abgewandte Ende der Trennwand 34 gebildet wird. In dieser Betriebsstellung werden von dem Hauptablaufkanal 12 kommende Tabletten 44 in den zweiten Ablaufkanal 24 geleitet.

Es sei daraufhin gewiesen, dass obgleich in den Figuren der erste und zweite Ablaufkanal 22, 24 nebeneinander angeordnet sind, diese selbstverständlich auch übereinander angeordnet sein können. Die Funktion und der Aufbau des Tablettenablaufs 10 entspricht der oben erläuterten Funktion.

## Patentansprüche

1. Tablettenablauf (10) zum Abführen von in einer Tablettenpresse (100) verpressten Tabletten, mit einem Hauptablaufkanal (12), der mindestens eine Verzweigung (20) in mindestens einen ersten Ablaufkanal (22) und mindestens einen von dem ersten Ablaufkanal (22) durch mindestens eine Trennwand (34) getrennten zweiten Ablaufkanal (24) aufweist, wobei an der Verzweigung (20) eine Weiche (36) vorgesehen ist, die derart betätigbar ist, dass Tabletten (44) aus dem Hauptablaufkanal (12) wahlweise in den ersten Ablaufkanal (22) oder in den zweiten Ablaufkanal (24) geführt werden, wobei die Weiche (36) einen Führungskanal (46) für die Tabletten (44) aufweist, und dass ein Führungsgetriebe vorgesehen ist, mit dem der Führungskanal (46) zwischen einer ersten, den Hauptablaufkanal (12) mit dem ersten Ablaufkanal (22) verbindenden Stellung und einer zweiten, den Hauptablaufkanal (12) mit dem zweiten Ablaufkanal (24) verbindenden Stellung bewegbar ist, **dadurch gekennzeichnet, dass** der Führungskanal (46) mit seinem dem Hauptablaufkanal (12) abgewandten Ende um eine erste Drehachse (54) drehbar an einem ersten Ende einer Koppelstange (56) gelagert ist, wobei das zweite Ende der Koppelstange um eine zweite Drehachse (58) drehbar an der Trennwand (34) gelagert ist, und wobei ein Stellantrieb vorgesehen ist, der die Koppelstange (56) zur Bewegung des Führungskanals (46) zwischen der ersten und der zweiten Stellung um die zweite Drehachse (58) dreht, wobei eine Drehbewegung der Koppelstange (56) in eine kombinierte Dreh- und Linearbewegung des Führungskanals (46) übertragen wird und der Führungskänal (46) bei einer Bewegung zwischen der ersten Stellung und der zweiten Stellung mit seinem dem Hauptablaufkanal (12) abgewandten Ende zumindest zeitweise einen Abstand zu der Trennwand (34) einnimmt.

2. Tablettenablauf (10) zum Abführen von in einer Tablettenpresse (100) verpressten Tabletten, mit einem Hauptablaufkanal (12), der mindestens eine Verzweigung (20) in mindestens einen ersten Ablaufkanal (22) und mindestens einen von dem ersten Ablaufkanal (22) durch mindestens eine Trennwand (34) getrennten zweiten Ablaufkanal (24) aufweist, wobei an der Verzweigung (20) eine Weiche (36) vorgesehen ist, die derart betätigbar ist, dass Tabletten (44) aus dem Hauptablaufkanal (12) wahlweise in den ersten Ablaufkanal (22) oder in den zweiten Ablaufkanal (24) geführt werden, wobei die Weiche (36) einen Führungskanal (46) für die Tabletten (44) aufweist, und dass ein Führungsgetriebe vorgesehen ist, mit dem der Führungskanal (46) zwischen einer ersten, den Hauptablaufkanal (12) mit dem ersten Ablaufkanal (22) verbindenden Stellung und einer zweiten, den Hauptablaufkanal (12) mit dem zweiten Ablaufkanal (24) verbindenden Stellung bewegbar ist, **dadurch gekennzeichnet, dass** der Führungskanal (46) mit seinem dem Hauptablaufkanal (12) abgewandten Ende um eine erste Drehachse (54) drehbar an einem Exzenter gelagert ist, wobei der Exzenter um eine zweite Drehachse (58) drehbar an der Trennwand (34) gelagert ist, und wobei ein Stellantrieb vorgesehen ist, der den Exzenter zur Bewegung des Führungskanals (46) zwischen der ersten und der zweiten Stellung um die zweite Drehachse (58) dreht, wobei eine Drehbewegung des Exzenters in eine kombinierte Dreh- und Linearbewegung des Führungskanals (46) übertragen wird und der Führungskanal (46) bei einer Bewegung zwischen der ersten Stellung und der zweiten Stellung mit seinem dem Hauptablaufkanal (12) abgewandten Ende zumindest zeitweise einen Abstand zu der Trennwand (34) einnimmt.

3. Tablettenablauf nach einem der Ansprüche 1 oder 2, **dadurch gekennzeichnet, dass** der Führungskanal (46) einen Führungsboden (48) zur Aufnahme der Tabletten (44) und mindestens zwei sich von dem Führungsboden erstreckende seitliche Wände aufweist.

4. Tablettenäbläuf nach einem der vorhergehenden Ansprüche, **dadurch gekennzeichnet, dass** der Führungskanal (46) mit seinem dem Hauptablaufkanal (12) abgewandten Ende in der ersten Stellung in oder an dem ersten Ablaufkanal (22) angeordnet ist und in der zweiten Stellung in oder an dem zweiten Ablaufkanal (24) angeordnet ist.

5. Tablettenablauf nach einem der vorhergehenden Ansprüche, **dadurch gekennzeichnet, dass** der erste Ablaufkanal (22) und der zweite Ablaufkanal (24) nebeneinander angeordnet sind.

6. Tablettenablauf nach einem der Ansprüche 1 bis 4, **dadurch gekennzeichnet, dass** der erste Ablaufkanal (22) und der zweite Ablaufkanal (24) übereinander angeordnet sind.

7. Tablettenpresse, umfassend mindestens einen Tablettenablauf (10) nach einem der vorhergehenden Ansprüche.

## Claims

1. A tablet discharge (10) for removing tablets pressed in a tablet press (100), having a main discharge channel (12) that has a least one branch (20) in at least one first discharge channel (22), and at least one second discharge channel (24) separated from the first discharge channel (22) by at least one partition wall (34), wherein a shunt (36) is provided at the branch (20) which can be actuated such that the tablets (44) are optionally guided out of the main discharge channel (12) into the first discharge channel (22) or into the second discharge channel (24), wherein the shunt (36) has a guide channel (46) for the tablets (44), and a guide gearing is provided by means of which the guide channel (46) can be moved between a first position connecting the main discharge channel (12) to the first discharge channel (22) and a second position connecting the main discharge channel (12) to the second discharge channel (24), **characterized in that** the end of the guide channel (46) facing away from the main discharge channel (12) is rotatably mounted about a first rotary axis (54) on a first end of a coupling rod (56), wherein the second end of the coupling rod is rotatably mounted about a second rotary axis (58) on the partition wall (34), and wherein an actuator is provided that rotates the coupling rod (56) about the second rotary axis (58) to move the guide channel (46) between the first and second position, wherein a rotary movement of the coupling rod (56) is translated into a combined rotary and linear movement of the guide channel (46), and the end of the guide channel (46) facing away from the discharge channel (2) at least temporarily assumes a distance from the partition wall (34) while moving between the first position and second position.

2. The tablet discharge (10) for removing tablets pressed in a tablet press (100), having a main discharge channel (12) that has a least one branch (20) in at least one first discharge channel (22), and at least one second discharge channel (24) separated from the first discharge channel (22) by at least one partition wall (34), wherein a shunt (36) is provided at the branch (20) which can be actuated such that the tablets (44) are optionally guided out of the main discharge channel (12) into the first discharge channel (22) or into the second discharge channel (24), wherein the shunt (36) has a guide channel (46) for the tablets (44), and a guide gearing is provided by means of which the guide channel (46) can be moved between a first position connecting the main discharge channel (12) to the first discharge channel (22) and a second position connecting the main discharge channel (12) to the second discharge channel (24), **characterized in that** the end of the guide channel (46) facing away from the main discharge channel (12) is rotatably mounted about a first rotary axis (54) on an eccentric, wherein the eccentric is rotatably mounted about a second rotary axis (58) on the partition wall (34), and wherein an actuator is provided that rotates the eccentric about the second rotary axis (58) to move the guide channel (46) between the first and second position, wherein a rotary movement of the eccentric is translated into a combined rotary and linear movement of the guide channel (46), and the end of the guide channel (46) facing away from the discharge channel (12) at least temporarily assumes a distance from the partition wall (34) while moving between the first position and second position.

3. The tablet discharge according to one of claims 1 or 2, **characterized in that** the guide channel (46) has a guide floor (48) for receiving the tablets (44), and at least two side walls extending from the guide floor.

4. The tablet discharge according to one of the preceding claims, **characterized in that** the end of the guide channel (46) facing away from the main discharge channel (12) is arranged in the first position in or on the first discharge channel (22), and is arranged in the second position in on the second discharge channel (24).

5. The tablet discharge according to one of the preceding claims, **characterized in that** the first discharge channel (22) and second discharge channel (24) are arranged adjacent to each other.

6. The tablet discharge according to one of claims 1 to 4, **characterized in that** the first discharge channel (22) and second discharge channel (24) are arranged one above the other.

7. A tablet press comprising at least one tablet discharge (10) according to one of the preceding claims.

## Revendications

1. Système d'évacuation de comprimés (10) pour le transport de comprimés ayant été comprimés dans une pastilleuse (100), avec un canal d'évacuation principal (12) qui présente au moins une ramification (20) en au moins un premier canal d'évacuation (22) et au moins un second canal d'évacuation (24) séparé du premier canal d'évacuation (22) par au moins une paroi de séparation (34), dans lequel un dispositif de séparation (36) est prévu au niveau de la ramification (20), lequel peut être actionné de telle sorte que des comprimés (44) provenant du canal d'évacuation principal (12) sont guidés au choix dans le premier canal d'évacuation (22) ou dans le second canal d'évacuation (24), dans lequel le dispositif de séparation (36) présente un canal de guidage (46) pour les comprimés (44), et qu'un engrenage de guidage est prévu, avec lequel le canal de guidage (46) peut être déplacé entre une première position connectant le canal d'évacuation principal (12) au premier canal d'évacuation (22) et une seconde position connectant le canal d'évacuation principal (12) au second canal d'évacuation (24), **caractérisé en ce que** le canal de guidage (46) est logé avec son extrémité détournée du canal d'évacuation principal (12) à rotation autour d'un premier axe de rotation (54) à une première extrémité d'une bielle de direction (56), dans lequel la seconde extrémité de la bielle de direction est logée à rotation autour d'un second axe de rotation (58) au niveau de la paroi de séparation (34), et dans lequel un mécanisme de commande est prévu, lequel fait tourner la bielle de direction (56) autour du second axe de rotation (58) pour le déplacement du canal de guidage (46) entre la première et la seconde position, dans lequel un mouvement rotatif de la bielle de direction (56) est transmis dans un mouvement rotatif et linéaire combiné du canal de guidage (46), et le canal de guidage (46) adopte au moins temporairement un écart par rapport à la paroi de séparation (34) lors d'un mouvement entre la première position et la seconde position avec son extrémité détournée du canal d'évacuation principal (12).

2. Système d'évacuation de comprimés (10) pour le transport de comprimés ayant été comprimés dans une pastilleuse (100), avec un canal d'évacuation principal (12) qui présente au moins une ramification (20) en au moins un premier canal d'évacuation (22) et au moins un second canal d'évacuation (24) séparé du premier canal d'évacuation (22) par au moins une paroi de séparation (34), dans lequel un dispositif de séparation (36) est prévu au niveau de la ramification (20), lequel peut être actionné de telle sorte que des comprimés (44) provenant du canal d'évacuation principal (12) sont guidés au choix dans le premier canal d'évacuation (22) ou dans le second canal d'évacuation (24), dans lequel le dispositif de séparation (36) présente un canal de guidage (46) pour les comprimés (44), et qu'un engrenage de guidage est prévu, avec lequel le canal de guidage (46) peut être déplacé entre une première position connectant le canal d'évacuation principal (12) au premier canal d'évacuation (22) et une seconde position connectant le canal d'évacuation principal (12) au second canal d'évacuation (24), **caractérisé en ce que** le canal de guidage (46) est logé avec son extrémité détournée du canal d'évacuation principal (12) à rotation autour d'un premier axe de rotation (54) au niveau d'un excentrique, dans lequel l'excentrique est logé à rotation autour d'un second axe de rotation (58) au niveau de la paroi de séparation (34), et dans lequel un mécanisme de commande est prévu, lequel fait tourner l'excentrique autour du second axe de rotation (58) pour le déplacement du canal de guidage (46) entre la première et la seconde position, dans lequel un mouvement rotatif de l'excentrique est transmis dans un mouvement rotatif et linéaire combiné du canal de guidage (46), et le canal de guidage (46) adopte au moins temporairement un écart par rapport à la paroi de séparation (34) lors d'un mouvement entre la première position et la seconde position avec son extrémité détournée du canal d'évacuation principal (12).

3. Système d'évacuation de comprimés selon une des revendications 1 ou 2, **caractérisé en ce que** le canal de guidage (46) présente un fond de guidage (48) pour la réception des comprimés (44) et au moins deux parois latérales s'étendant depuis le fond de guidage.

4. Système d'évacuation de comprimés selon une des revendications précédentes, **caractérisé en ce que** le canal de guidage (46) est disposé avec son extrémité détournée du canal d'évacuation principal (12) dans la première position dans ou sur le premier canal d'évacuation (22) et est disposé dans la seconde position dans ou sur le second canal d'évacuation (24).

5. Système d'évacuation de comprimés selon une des revendications précédentes, **caractérisé en ce que** le premier canal d'évacuation (22) et le second canal d'évacuation (24) sont disposés l'un à côté de l'autre.

6. Système d'évacuation de comprimés selon une des revendications 1 à 4, **caractérisé en ce que** le premier canal d'évacuation (22) et le second canal d'évacuation (24) sont disposés l'un au-dessus de l'autre.

7. Pastilleuse comprenant au moins un système d'évacuation de comprimés (10) selon une des revendications précédentes.
